# EUROPEAN PATENT APPLICATION

(11) **EP 4 759 684 A1**
(43) Date of publication of application: **17.06.2026**
(21) Application number: 25222116.3
(22) Date of filing: 10.12.2025
(51) Int. Cl.: B62D 35/00, B62D 37/02

(54) **IMPROVED PROTECTION ELEMENT FOR A VEHICLE**

(30) Priority: 10.12.2024 IT 202400028035
(71) Applicant: IVECO S.P.A., 10156 Torino (IT)
(72) Inventor: PAOLINI, Federico, 10156 TORINO (IT); BRONDOLO, Luca, 10156 TORINO (IT)
(74) Representative: Studio Torta S.p.A.

(57) **Abstract**

Rain gutter (5) for a portion (2) of a vehicle (1), comprising a profiled element (6) and a support (7) placed at the end of the profiled element (6) and configured to support the profiled element (6) in a movable manner with respect to the portion (2), the profiled element (6) being shaped to shift from a first position, in which it cooperates in contact with the portion (2), to a second position, in which it is spaced apart from the portion (2), the profiled element (6) shifting between the first and second positions as a function of the speed of the vehicle (1).

## Description

### CROSS-REFERENCE TO RELATED APPLICATIONS

This patent application claims priority from Italian patent application no. 102024000028035 filed on December 10, 2024, the entire disclosure of which is incorporated herein by reference.

### TECHNICAL FIELD

The invention relates to a protection element for a vehicle, in particular a rain protection element, also called "rain gutter".

The invention preferably, though not exclusively applies to a commercial vehicles. Hereinafter reference will be made to this application by mere way of example.

### KNOWN STATE OF THE ART

Commercial vehicles include storage spaces for goods. These spaces are normally defined in a box equipped with doors designed to allow access to the housing space. An example of this vehicle is a truck.

The box clearly has, as it is known, a significant extension and, in case of rain, it can collect water on its surface that tends to drip down the doors.

In case of opening of these doors, water therefore tends to fall towards the inside of the housing or to fall on the user who wants to access it.

In order to avoid this inconvenience, it is known to use a gasket, also known in jargon as a "rain gutter"" placed near the edge of the box adjacent to the doors to prevent this pouring of water.

However, this rain gutter increases aerodynamic drag by 5% compared to a configuration not provided with it. Consequently, a vehicle equipped with a rain gutter has a fuel consumption that is 2% higher compared to a vehicle in which the rain gutter is absent.

In order to reduce fuel consumptions to avoid emissions of pollutants, it would therefore be necessary to eliminate the rain gutter; however, such elimination would lead to the disadvantages discussed above.

Therefore, there is a need to provide a rain gutter that has a lower aerodynamic drag, however, fulfilling the task of diverting water towards the doors.

The object of the invention is to fulfil the needs discussed above in an optimized and economic fashion.

### SUMMARY OF THE INVENTION

The aforesaid object is reached by a protection element, a vehicle portion and a vehicle as claimed in the appended claims that are an integral part of this description.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- Figure 1 is a perspective view of a vehicle provided with a protection element according to the invention in a first operating configuration;
- Figure 2 is a perspective view of a vehicle provided with a protection element according to the invention in a second operating configuration;
- Figure 3 is a schematic side view of the protection element according to a first embodiment of the invention in a first operating configuration;
- Figure 4 is a schematic side view of the protection element of figure 3 with parts removed for greater clarity;
- Figure 5 is a schematic side view of the protection element of figure 3 in a first operating configuration with parts removed for greater clarity;
- Figure 6 is a schematic side view of the protection element according to a second embodiment of the invention in a first operating configuration with parts removed for greater clarity;
- Figure 7 is a schematic side view of the protection element of figure 6 in a second operating configuration;
- Figure 8 is an exploded view from the top, which also is schematic and partially sectional, of the second embodiment of figures 6 and 7;
- Figure 9 is a schematic side view of the protection element according to a third embodiment of the invention in a first operating configuration with parts removed for greater clarity; and
- Figure 10 is a schematic side view of the protection element of figure 9 in a second operating configuration.

### DETAILED DESCRIPTION OF THE INVENTION

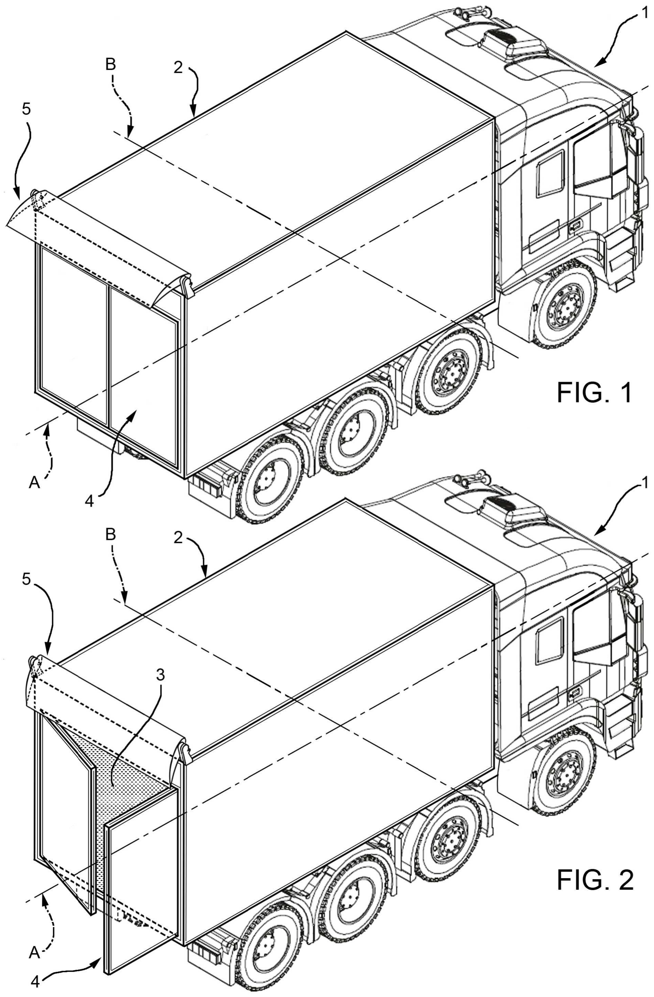

Figures 1 and 2 show an example of a commercial vehicle 1, such as a truck, extending along a longitudinal axis A, coinciding with the driving direction of the vehicle 1.

In detail, the vehicle 1 comprises a box 2 configured to define a housing space 3. The box 2 comprises at least one door 4 configured to allow selective access to the space 3. In other words, the door 4, as it is known, can assume a closed configuration, which isolates the space 3 from the outside, or an open one, which allows access to it.

In detail, the box 2 has a closed shape, which, in the embodiment described herein, extends longitudinally along the axis A and along a transverse axis B perpendicular to the axis A.

The vehicle 1 further comprises a protection element 5 configured, in use, to prevent elements, such as liquids, like rain, from falling from an edge of the box 2. In particular, said protection element 5 is known in jargon by the name of "rain gutter", to which reference will be made below.

The drawings represent this element in an enlarged manner, so as to emphasize it, and the dimensions thereof can be, if necessary, of the order of a few centimetres.

In the embodiment described herein, the rain gutter 5 is placed near a rear edge of the box 2 considering the longitudinal axis A of the vehicle 1. In detail, therefore, the rain gutter 5 extends along the transverse axis B and, in particular, along the entire transverse extension of the box 2.

According to the invention, the rain gutter 5 comprises a profiled element 6 carried by a support 7 in a movable manner in order to assume, as a function of the speed of the vehicle 1, a first configuration, in which the profiled element 6 cooperates in contact with an edge of the box 2, and a second configuration, in which the profiled element 6 is spaced apart from the edge of the box 2.

Advantageously, the profiled element 6 extends along the transverse axis B and has a cross section along the longitudinal axis A shaped like an airfoil, in particular a concave/convex airfoil, cooperating with the underside with the box 2.

In detail, the profiled element 6 is connected to the support 7 in a movable manner in proximity to the leading edge and selectively cooperates in contact with the edge of the box 2 with the trailing edge.

The support 7 advantageously comprises two portions placed at the ends of the profiled element 6, along the transverse axis B, each connected to the profiled element 6 in a movable manner.

Advantageously, like in the embodiment described herein, said portions comprise a base portion 7' that can be fixed to the box 2 and a flange 7'' extending at least along a vertical axis C, perpendicular to the axes A, B, starting from the box 2.

In the embodiment described herein, the flange 7'' extends along the longitudinal axis A so as to protrude from the edge of the box 2.

In detail, in the embodiment shown herein, the profiled element 6 is carried by the support 7 by means of a hinge mechanism 8, in detail a hinge 8 having an axis of rotation around an axis parallel to the transverse axis B.

This hinge 8, as mentioned above, is obtained close to the leading edge of the airfoil.

Advantageously, the rain gutter 5 comprises resistance means 9 configured to oppose the movement of the profiled element 6 between the first and the second configuration, i.e. configured to hold the rain gutter 5 in the first configuration until the vehicle reaches a predetermined speed 1.

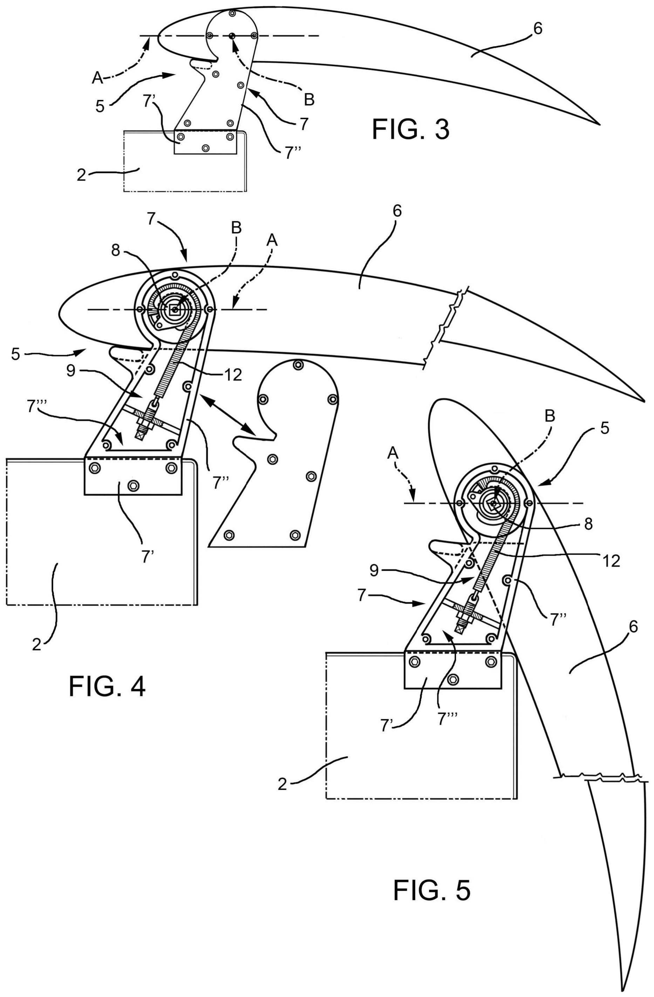

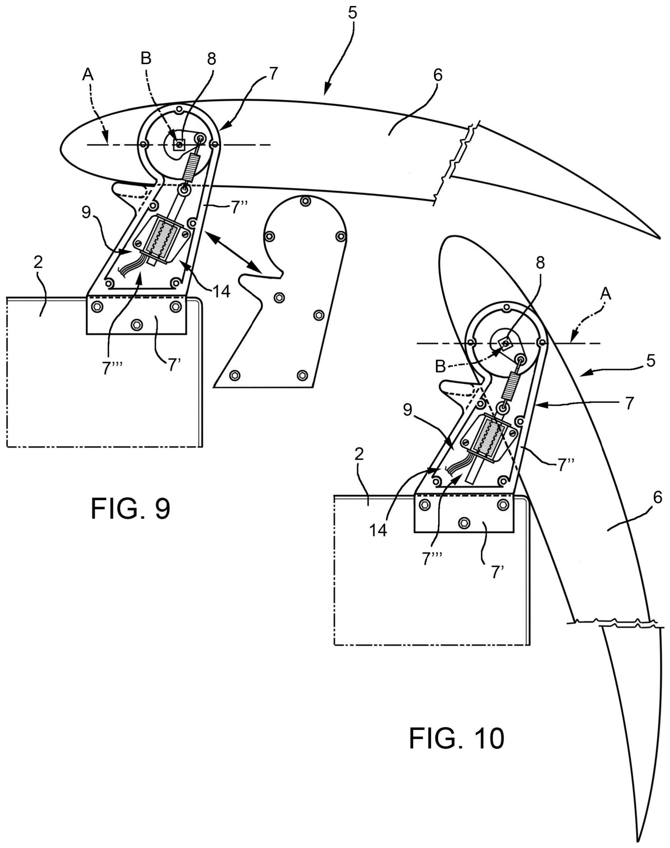

In detail, the resistance means 9 can be passive (figures 3 to 8) or active (figures 9 and 10).

In the first and second embodiments, the resistance means 9 comprise elastic means 11 operatively interposed between the support 7 and the airfoil 6 and configured to generate a force suited to hold the airfoil 6 in contact with the box 2.

In the first embodiment (figures 3 to 5), the elastic means 11 comprise a return spring 12, in particular a helical spring, connected at one end to the airfoil 6 and at a second end to the support 7.

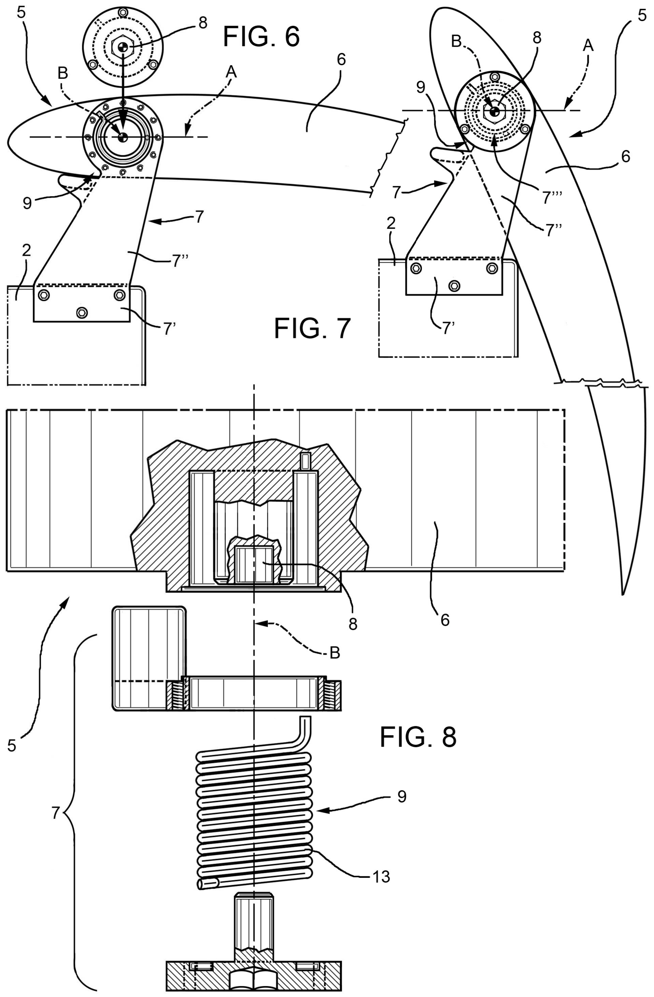

In the second embodiment (figures 6 to 8), the elastic means 11 comprise a torsional spring 13 connected at one end to the airfoil 6 and at a second end to the support 7.

In the third embodiment (figures 9 and 10), the rain gutter 5 comprises actuator means 14 configured to keep the profiled element 6 locked in the first configuration or allow it to shift to the second configuration or, alternatively, to adjust the position of the profiled element 6 as a function of vehicle speed.

In the embodiment described herein, the actuator means 14 comprise an electric actuator 15, such as an electric motor, which directly adjusts the position of the profiled element 6, but which could also be replaced by a magnet that locks or does not lock the profiled element 6 to the relative support 7.

In the embodiments described above, the elastic means 11 and the actuator 14 are housed in a space 7''' defined by the flange 7'', however it is clear that they could be housed on the outside.

In the third embodiment, therefore, an electronic unit (not shown) is advantageously provided, which is configured to supply a control signal to the actuator means 14.

The control signal can be processed by the electronic unit by acquiring data from the vehicle control unit, such as data relating to the speed of the vehicle, or by means of data from sensor means carried by the vehicle 1 and configured to detect a physical quantity indicating the speed of the vehicle, such as the speed of the air flowing over the box 2.

The operation of the embodiment of the rain gutter according to the invention described above will be disclosed below.

In general, the rain gutter remains in the first operating position if the vehicle is stationary - and, therefore, it is necessary to access the space 3 of the box 2 and to be protected in case of rain - or in the second operating position if the vehicle is running at a predetermined speed.

The opening can be free, due to the sole weight of the profiled element 6 that moves around the support 7, by means of the hinge 8, or enabled after a minimum speed, thanks to the resistance to movement imparted by the resistance means.

If these are active, they are controlled by the electronic unit to unlock the movement of the profiled element 6 or to directly adjust the movement thereof as a function of vehicle speed.

According to the operation described above, in the case of active resistance means, the invention can also relate to a method for controlling a rain gutter 5 as described above, comprising the steps of:
i) Acquiring the speed of the vehicle 1;
ii) Adjusting the position of the profiled element 6 between the first and second operating positions as a function of the speed acquired in step i).

Advantageously, point i) can be carried out by obtaining the speed data from the vehicle control unit or by acquiring data from sensor means.

The step ii) can merely entail locking or unlocking the profiled element 6 to autonomously shift between the first and second operating positions or positioning it in a controlled manner between these two limit positions as a function of the speed detected in step i).

Owing to the above, the advantages of a protection element, a vehicle portion and a vehicle according to the invention are evident. Thanks to the use of a profile element that is movable as a function of the vehicle speed, it is possible to guarantee the rain gutter functions, however without incurring aerodynamic drag when the vehicle is moving.

Therefore, the consumptions of the vehicle are reduced, while the rain gutter function is ensured.

Furthermore, the movable profiled element equipped with an airfoil is particularly suitable for reducing consumption during the movement of the vehicle.

As demonstrated by the various embodiments, the proposed rain gutter can be manufactured in shapes, positions and for vehicles with different design needs.

In particular, the proposed system is particularly cost-effective and does not excessively increase the dimensions of the vehicle.

Finally, the protection element, the vehicle portion and the vehicle according to the invention can be subjected to changes and variants, which, though, do not go beyond the scope of protection set forth in the appended claims.

Clearly, the shape of the profiled element 6 can vary depending on the type and speeds reached by the vehicle 1.

As explained above, the resistance means can be present or not and take different forms.

Furthermore, the movable connection advantageously is a hinge or could be manufactured differently.

As shown, the control can be carried out in different ways and by detecting the speed through different means for acquiring it.

## Claims

1. Rain gutter (5) for a portion (2) of a vehicle (1), said rain gutter (5) comprising a profiled element (6) and a support (7) placed at the end of said profiled element (6) and configured to support said profiled element (6) in a movable manner with respect to said portion (2),
said profiled element (6) being shaped to pass from a first position in which it cooperates in contact with said portion (2) to a second position in which it is spaced with respect to said portion (2), said profiled element (6) passing between said first and second positions as a function of the speed of said vehicle (1), wherein said airfoil extends along a longitudinal axis (A) parallel to the direction of the vehicle (1), wherein said airfoil profile is concave/convex, with the concavity facing said portion (2);
wherein said movable connection between said support (7) and said profiled element (6) comprises a hinge (8).

2. Rain gutter according to claim 1, wherein said profiled element (6) has an airfoil section.

3. Rain gutter according to one of claims 1 or 2, wherein said profiled element (6) is movably connected to said support (7) in proximity to the leading edge of said airfoil profile.

4. Rain gutter according to one of the preceding claims, comprising resistance means (9) configured to oppose the passage of said profiled element (6) between said first and said second position.

5. Rain gutter according to claim 4, wherein said resistance means (9) are of passive typology and comprise elastic means (11).

6. Rain gutter according to claim 4 or 5, wherein said resistance means (9) are integrated in said movable connection between said support (7) and said profiled element (6).

7. Rain gutter according to claim 5, wherein said resistance means (9) are of active typology.

8. Rain gutter according to claim 7, wherein said resistance means (9) comprise actuator means (14) and an electronic unit configured to control said actuator means as a function of the speed of said vehicle.

9. Portion (2) of a vehicle (1) provided with a rain gutter (5) according to any of the preceding claims.

10. Vehicle (1) comprising a portion (2) according to claim 9.

11. Method of controlling a rain gutter (5) in a vehicle (1) according to claim 10 when dependent on claim 8, said method comprising the steps of:
i) Acquiring the speed of said vehicle (1);
ii) Adjusting the position of said profiled element (6) between the first and second operating positions as a function of the speed acquired in step i).
